# EUROPÄISCHE PATENTANMELDUNG

(11) **EP 1 443 011 A1**
(43) Veröffentlichungstag der Anmeldung: **04.08.2004**
(21) Anmeldenummer: 03028559.7
(22) Anmeldetag: 11.12.2003
(51) Int. Cl.: B66B 23/02

(54) **Fahrtreppe oder Fahrsteig**

(30) Priorität: 29.01.2003 DE 20301357 U
(71) Anmelder: Firma ThyssenKrupp Fahrtreppen GmbH, 22113 Hamburg (DE)
(72) Erfinder: Tolle, Jürgen, 21465 Reinbek (DE)
(74) Vertreter: Baronetzky, Klaus, Dipl.-Ing.

(57) **Zusammenfassung**

Die Erfindung betrifft eine Fahrtreppe oder einen Fahrsteig, mit zwei Antriebsketten beidseitig eines mit Laufrollen auf Laufschienen geführten Stufen- oder Palettenbandes, welche Antriebsketten über Kettenhülsen auf Lagerzapfen der Stufen oder Paletten drehbeweglich sind. Die Kettenhülse (30) trägt Kettenschonrollen (38, 40, 41) und eine Überleitkurve (44) erstreckt sich seitlich eines Ketten-Umlenkrades (42), auf dem die Antriebsketten (24) über Kettenschonrollen (38, 40, 41) laufen.

## Beschreibung

Die Erfindung betrifft eine Fahrtreppe oder einen Fahrsteig, gemäß dem Oberbegriff von Anspruch 1.

Aus der US-PS 4249649 ist eine Fahrtreppe mit außen liegender Kettenrolle bekannt. Bei dieser Fahrtreppe sind die Laufrollen für die Führung und Abstützung der Stufen außerhalb des Anlenkpunkts für die Antriebskette angeordnet. Bei einer derartigen Konstruktion besteht eine recht große Baubreite für die Abstützung des Stufenbandes. Diese Ausgestaltung kann eingesetzt werden, wenn eine massive Balustrade realisiert werden soll. In vielen Fällen ist es jedoch erwünscht, der Fahrtreppe oder dem Fahrsteig eine schlankere und ästhetisch ansprechendere Anmutung zu geben. Hierzu werden regelmäßig Balustraden-Glasscheiben eingesetzt, die eine wesentlich geringere Baubreite des Unterbaus der Fahrtreppe oder des Fahrsteigs bedingen.

Es ist auch vorgeschlagen worden, die Laufrollen unmittelbar angrenzend an die Stufenaußenseite zu montieren und weitere Antriebselemente unterhalb der Fahrtreppe vorzusehen. Diese Lösung erfordert allerdings eine vergrößerte Bauhöhe, was gerade dann unerwünscht ist, wenn die Fahrtreppe frei tragend gelagert ist und einen Übergang zwischen Geschossen bilden soll. Derartige Lösungen finden sich häufig in Kaufhäusern. Ein Beispiel für eine derartige Lösung, bei der die Bauhöhe erhöht ist, ist die aus der DE-OS 196 06 317 bekannte Rolltreppe.

Ferner ist es vorgeschlagen worden, die Laufrollen - und damit selbstverständlich auch die zugehörigen Laufschienen - zwischen Fahrtreppe und Kettenanlenkung anzuordnen. Eine derartige Lösung hat auch den Vorteil, dass die Länge der Stützachse für die Stufe vermindert ist, so dass eine leichtere und vergleichsweise steifere Konstruktion möglich ist.

Neben einem schlanken Aufbau ist bei Fahrtreppen auch ein gewisser Komfort erwünscht. Hierzu gehört beispielweise ein ruckfreier Anlauf und eine ruckfreie Bremsung der Fahrtreppe, aber auch ein schwingungsfreier Antrieb, der zudem geräuscharm sein soll. Schwingungen werden in die Antriebsketten und damit in das Stufenband der Fahrtreppe oder das Palettenband des Fahrsteigs durch den sogenannten Polygoneffekt eingeleitet. Durch den unterschiedlich wirksamen Hebelarm der Antriebskette im Verlauf eines Kettenglieds bei dessen Führung um das Umlenkrad entsteht der Polygoneffekt, der dazu führt, dass eine Längsschwingung in die Antriebskette eingeleitet wird.

Zur Bekämpfung des Polygoneffekts sind verschiedene Maßnahmen bekannt geworden. So wird regelmäßig die Kettenteilung recht gering gewählt, beispielsweise etwa 100 mm oder gar 80 mm. Auch sind Dämpfungspuffer im Umlenkrad bekannt geworden, die Schwingungen entgegenwirken sollen. Ferner sind auch recht komplizierte Antriebe, insbesondere Getriebe mit kompensierenden Geschwindigkeitsprofilen bekannt geworden. Derartige Lösungen sind ausgesprochen aufwändig. Durch die periodische Abbremsung und Beschleunigung entstehen zusätzliche Energieverluste, die bei der Auslegung der Antriebsmotoren berücksichtigt werden müssen.

Andererseits wäre es aus Kostengründen wünschenswert, mit möglichst langen Kettengliedern zu arbeiten. Ketten mit langen Kettengliedern haben eine höhere spezifische Festigkeit, also ein besseres Verhältnis von Festigkeit zu Gewicht, und sind zudem preisgünstiger und wartungsärmer, nachdem weniger Kettengelenke erforderlich sind.

Um den Polygoneffekt und in den Antriebsstrang eingeleitete Schwingungen wenigstens etwas zu dämpfen, ist es bekannt geworden, Kettenrollen der Antriebskette mit einer Lauffläche aus Gummi zu versehen, so dass die Kettenrolle auf der Laufschiene auch vergleichsweise sanft abläuft.

Diese Lösung bietet zwar auch eine gewisse Nachgiebigkeit bei der Änderung der Bewegungsrichtung, so dass Spitzen der Geschwindigkeitsänderungen und damit die Wirkung des Polygoneffekts etwas abgepuffert werden können. Andererseits werden derartige Kettenrollen partiell recht stark belastet, so dass sie vergleichsweise verschleißintensiv sind.

Bei Fahrtreppen und Fahrsteigen können deutlich unterschiedliche Belastungssituationen vorliegen. Während eine leer fahrende Fahrtreppe im Aufwärts-Abwärts-Betrieb bereits unterschiedliche Belastungszustände an den beiden Umlenkräder für die Antriebsketten aufweist, gilt dies umso mehr für belastete Fahrtreppen. Gerade bei größeren Fahrtreppenlängen und -höhen, wie sie beispielweise für U-Bahnhöfe erforderlich sind, sind vom Antrieb der Fahrtreppe bei der Aufwärtsfahrt enorme Kräfte aufzubringen, die entsprechend auch von der Antriebskette übertragen werden und abgestützt werden müssen. Der Antriebsmotor ist regelmäßig oben angeordnet, um die Antriebskraft zumindest nicht noch ein weiteres Mal umlenken zu müssen.

Dennoch muss beispielweise bei einer Belastung einer Fahrtreppe mit 100 Personen eine Kraft von etwa 700 kN aufgebracht werden. Um derartige Kräfte aufzufangen, ist ein möglichst steifer Antrieb wünschenswert, auch um die geforderten Toleranzen bei der Führung einhalten zu können. Diese Forderung steht jedoch im Gegensatz zu den Komfortanforderungen der Fahrtreppenbetreiber, die einen möglichst geräuschlosen und "sanften" Fahrtreppenlauf wünschen.

Für einen sanften Fahrtreppenlauf wesentlich ist auch je die Einführung der Antriebskette in das Ketten-Umlenkrad. Um die Bewegung bei der Zuführung an die Bewegung der Kette um das Kettenrad anzunähern und den Polygoneffekt wenigstens teilweise zu kompensieren, ist es vorgeschlagen worden, die Laufschiene, die sich an sich gerade erstreckt, etwas zu verlängern, und ihr endseitig eine gebogene Ausgestaltung zu geben. Diese Lösung ist jedoch unbefriedigend, wenn mit einer Gummi-Lauffläche versehene Kettenrollen verwendet werden, denn je nach Einfederung erhält dann die Kette ein unterschiedliches Bewegungsprofil, so dass der Polygoneffekt gegebenenfalls entweder nahezu nicht oder im anderen Belastungsfall überkompensiert werden kann, optimierte Ausgestaltung des Endes der Laufschiene vorrausgesetzt.

Demgegenüber liegt der Erfindung die Aufgabe zugrunde, eine Fahrtreppe oder einen Fahrsteig zu schaffen, der eine vergleichsweise große Kettenteilung erlaubt, aber dennoch - auch bei starker Belastung - ein günstiges Bewegungsprofil aufweist.

Diese Aufgabe wird erfindungsgemäß durch Anspruch 1 gelöst. Vorteilhafte Weiterbildungen ergeben sich aus den Unteransprüchen.

Erfindungsgemäß sind spezielle Überleitkurven vorgesehen, die sich neben den Kettenrädern erstrecken und die Bewegung mit dem Radius der Kette an dieser Stelle zur Kompensation des Polygoneffekts genau vorzeichnen. Die Überleitkurve ist bevorzugt recht steif, so dass sie auch bei Belastung nicht nachgibt. Sie ist zudem die Basis für erfindungsgemäße Kettenschonrollen, die auf der Kettenhülse für die Antriebskette vorgesehen sind und damit ungefedert sind und zugleich die Kettenhülse schonen. Die Kettenschonrollen vermögen daher die Bewegung der Antriebskette - in vertikaler Richtung betrachtet - wesentlich präziser festzulegen als die Laufrollen. Durch die speziellen Überleitkurven kann auch die Abstützung wesentlich näher an den Kettenrädern realisiert werden, als die bei den Laufschienen der Fall wäre.

In vorteilhafter Ausgestaltung der Erfindung ist es vorgesehen, dass zwei Überleitkurven dem Ketten-Umlenkrad unmittelbar benachbart angeordnet sind und sich im horizontalen Bereich bis zum Scheitelpunkt des Ketten-Umlenkrads erstrecken. Anschließend an den horizontalen Bereich ist an der Oberseite jeder Überleitkurve ein Radius ausgebildet, der exakt dem Radius des Umlenkrads an dieser Stelle entspricht. In dieser Ausgestaltung weisen damit sämtliche Teile der Kettenschonrollen den gleichen Durchmesser auf und der gebogene Bereich der Überleitkurve entspricht in seiner Höhe je exakt der Bewegung eines Zahngrunds des Ketten-Umlenkrads. In diesem Ausführungsbeispiel ist die Länge des gebogenen Bereichs etwas größer als die Länge eines Kettenglieds.

Erfindungsgemäß ist ein Kettenglied wesentlich länger als beim Stand der Technik, beispielweise 135 mm. Dennoch lässt sich erfindungsgemäß der Polygoneffekt nahezu vollständig kompensieren, und insbesondere ist die Kompensation praktisch belastungsunabhängig. Dennoch besteht eine verbesserte Komfortanmutung der erfindungsgemäßen Fahrtreppe, nachdem im unbelasteten Fall die Laufrollen eine relativ größere Abstützwirkung entfalten und die Fahrtreppe sanft laufen lassen.

Erfindungsgemäß können Entlastungskurven im Übergangsbogen und Dämpfungspuffer im Kettenrad entfallen, und der Antriebsstrang wird insgesamt weniger belastet. Während in dem hier dargestellten Ausführungsbeispiel mit der bevorzugten Ausführungsform das Ketten-Umlenkrad einteilig ausgebildet ist und die Überleitkurven sich beidseitig des Kettenrads erstrecken, ist auch eine Ausgestaltung in genau vertauschter Weise möglich. Bei dieser Lösung ist dann das Ketten-Umlenkrad im Bereich der Zähne im Schnitt U-förmig, so dass praktisch zwei parallele Zahnreihen vorliegen. Die Überleitkurve kann dann zwischen diesen Zahnreihen untergebracht werden. Auch hier kommen die Kettenschonrollen je auf der gleichen Höhe zum Einsatz.

Weitere Vorteile, Einzelheiten und Merkmale ergeben sich aus der nachfolgenden Beschreibung zweier Ausführungsbeispiele anhand der Zeichnung. Es zeigen:
- Fig. 1: eine Schnittansicht eines Teils einer ersten Ausführungsform einer erfindungsgemäßen Fahrtreppe oder eines erfindungsgemäßen Fahrsteigs, unter Darstellung der Kettenrollen, der Kettenschonrollen und der Laufschiene im Schnitt;
- Fig. 2: eine weitere Ausführungsform der erfindungsgemäßen Fahrtreppe oder des erfindungsgemäßen Fahrsteigs, wobei die Darstellung gemäß Fig. 1 gewählt wurde;
- Fig. 3 und 4: eine Detail-Seitenansicht einer erfindungsgemäßen Fahrtreppe oder eines erfindungsgemäßen Fahrsteigs, unter Darstellung der Überleitkurve und eines Teils der Ketten-Umlenkrads; und
- Fig. 5 und 6: einen Schnitt durch Überleitkurven und Kettenrad.

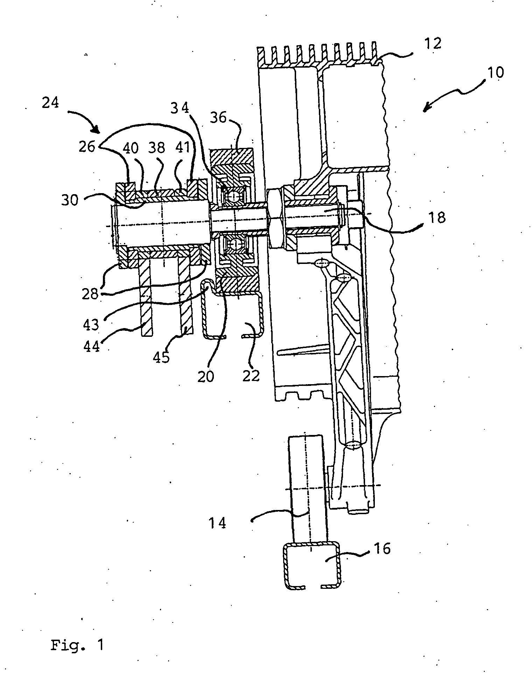

In Fig. 1 ist eine Fahrtreppe 10 dargestellt, und zwar in dem für die Erfindung relevanten Teil. Die Fahrtreppe weist eine Fahrtreppenstufe auf, die in an sich bekannter Weise gelagert ist. Eine hier nicht weiter relevante Schlepprolle 14 der Stufe läuft auf einer Sekundärlaufschiene 16.

Die Fahrtreppenstufe 12 wird geführt und angetrieben über einen Lagerzapfen 18, auf dem die Laufrolle 20 drehbeweglich gelagert ist. Die Laufrolle 20 läuft auf einer Laufschiene 22 und ist neben einer Antriebskette 24 für die Fahrtreppe ausgebildet.

Der Lagerzapfen 18 trägt im Bereich der Laufrolle 20 ein Wälzlager 34, das hier als Kugellager ausgebildet ist und auf dem die Laufrolle 20 abläuft.

Dieser Antrieb wird gemeinhin als Antrieb mit außenliegender Kettenrolle bezeichnet. Bei der erfindungsgemäßen Lösung ist es vorgesehen, dass die Laufrolle 20 auch einen Laufflächenbelag 36 aufweist, der etwas elastischer als die Laufrolle 20 im Übrigen ist und beispielsweise aus Kautschuk besteht. Der Laufflächenbelag 36 federt bei Belastung etwas ein und mindert die Laufgeräusche der Fahrtreppe oder des Fahrsteigs 10.

Erfindungsgemäß trägt die Kettenhülse 30 Kettenschonrollen, wobei in dem dargestellten Ausführungsbeispiel Kettenschonrollen 38, 40 und 41 vorgesehen sind. Die Kettenschonrollen 40 und 41 sind je seitlich den Kettengliedern 26 benachbart angeordnet, und zwischen Ihnen erstreckt sich die Kettenschonrolle 38. Die Kettenschonrolle 38 weist etwa die doppelte Breite je einer Kettenschonrolle 40 oder 41 auf. Die Kettenschonrollen bestehen aus einem recht harten und verschleißfesten Material.

Insgesamt ist der zylindrische Bereich zwischen den Kettengliedern 26 durch die aneinander angereihten Kettenschonrollen 38 bis 41 ausgefüllt.

In dem dargestellten Ausführungsbeispiel weist die Laufschiene 22 einen im Laufbereich im Wesentlichen L-förmigen Aufbau auf. Sie bildet eine Anlageschulter 43 aus, die in diesem Ausführungsbeispiel unterhalb der Kettenglieder 26 und 28 verläuft.

Diese Lösung erlaubt es, die Kettenrolle recht eng benachbart an der Stufe 12 anzuordnen, so dass die Baubreite insgesamt recht gering ist.

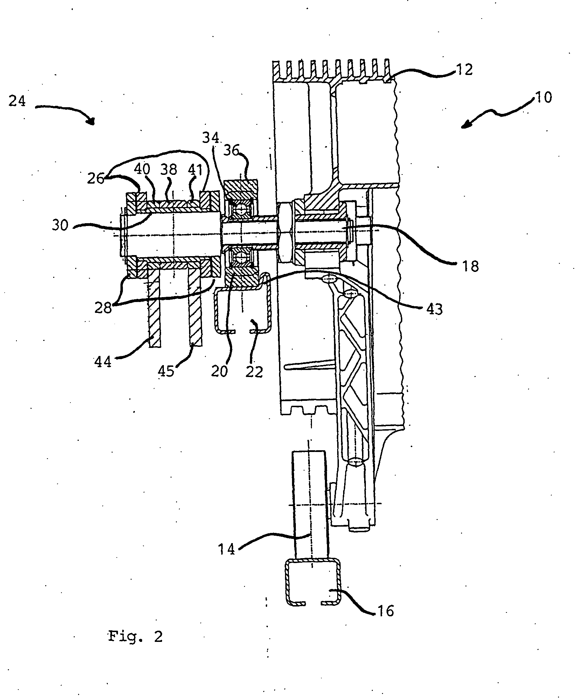

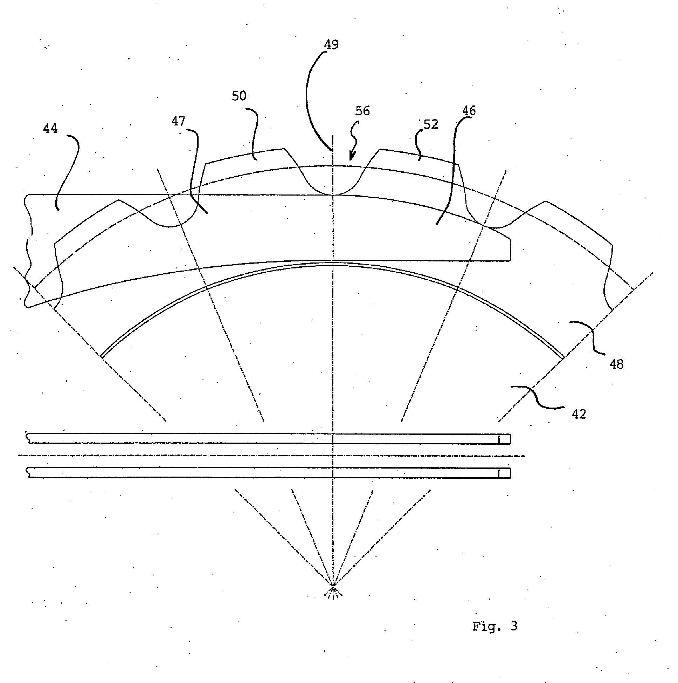

Aus Fig. 1 und Fig. 2 ist ersichtlich, dass die Kettenschonrollen 40 und 41 auf Überleitkurven 44 und 45 abgestützt sind. Die Abstützung erfolgt lediglich in dem Bereich, in dem es um die Einleitung der geraden Bewegung der Antriebskette 24 in die halbkreisförmige Bewegung um das Ketten-Umlenkrad geht. Dies ist aus Fig. 3 besser ersichtlich.

In Fig. 2 ist eine modifizierte Ausgestaltung der erfindungsgemäßen Lösung dargestellt. Bei dieser Lösung ist die Kettenrolle 45 kleiner. Die Anlageschulter 43 hat bei dieser Ausgestaltung keinen Platz unterhalb der Kettenglieder 26 und 28. Dementsprechend erstreckt sie sich auf der Innenseite der Laufrolle 20, also zwischen Stufe und Kettenrolle. Nachdem bei dieser Lösung die Laufrolle 20 schmaler ist, ist die Gesamtbreite der Stufe einschließlich des Endes des Lagerzapfens 18 auch nicht größer als bei der Ausgestaltung gemäß Fig. 1.

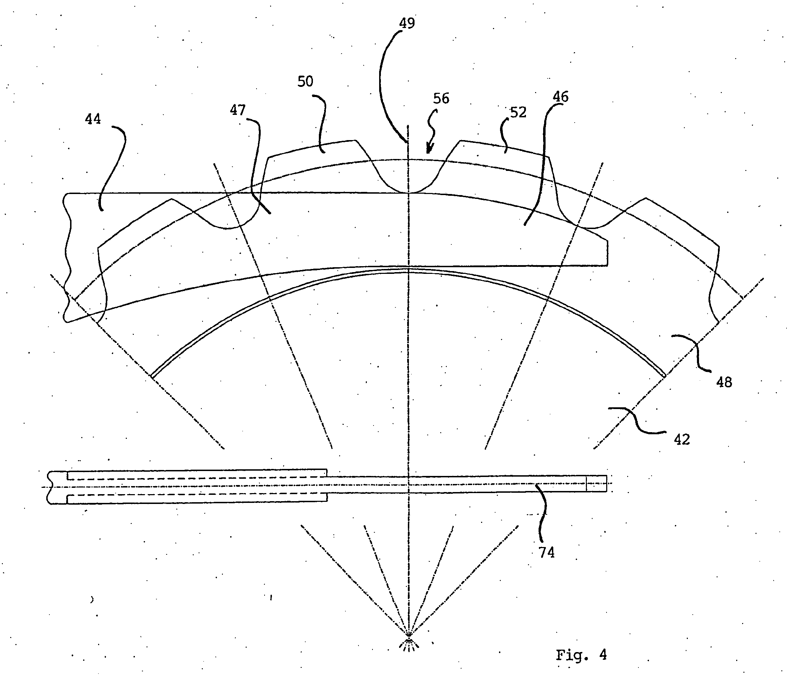

Aus Figuren 3 und 4 ist ersichtlich, in welcher Weise die Überleitkurven 44, 45 bzw. 74 gestaltet sein können. Jede Überleitkurve 44, 45 und 74 weist einen gebogenen Abschnitt 46 und einen geraden, also horizontalen Abschnitt 47 auf. Weiter unten in Figuren 3 und 4 ist die Überleitkurve nochmals in der Draufsicht dargestellt. Die Überleitkurve ist ein- oder zweiteilig und erstreckt sich beidseitig des Antriebsrads 42.

Aus Fig. 3 und 4 ist auch ersichtlich, dass sich der horizontale Abschnitt 47 bis zum Scheitelpunkt 49 des Kettenrads 42 erstreckt. Der gebogene Abschnitt 46 erstreckt sich über etwas mehr als die Länge eines Kettenglieds und weist eine Krümmung auf, die so gestaltet ist, dass der Radius mit der Achse des Ketten-Umlenkrads 42 zusammenfällt.

Das Kettenrad 42 weist außen, nämlich in dem Bereich, der von den Überleitkurven 44 und 45 abgedeckt wird, eine Verjüngung 48 auf. In diesem Bereich ist das Kettenrad 42 etwas schmaler, so dass die Überleitkurven 44 und 45 nah an die Zähne 50 des Kettenrads 42 herangeführt werden können.

In an sich bekannter Weise erstreckt sich zwischen zwei Zähnen 50 und 52 ein Zahngrund 56. Die radiale Höhe des Zahngrunds 56 entspricht im gebogenen Abschnitt 46 genau der radialen Höhe der Überleitkurve 44, 45 bzw. 74. Hierdurch liegen an dieser Stelle die Kettenschonrollen 40 und 41 auf den Überleitkurven 44 und 45 auf (oder die Kettenschonrolle 38 auf der Überleitkurve 74), und die Laufschienen 22 können deutlich vor den Kettenrädern, nämlich beim Beginn des horizontalen Abschnitts 47 der Überleitkurve 44, 45 oder 74, enden.

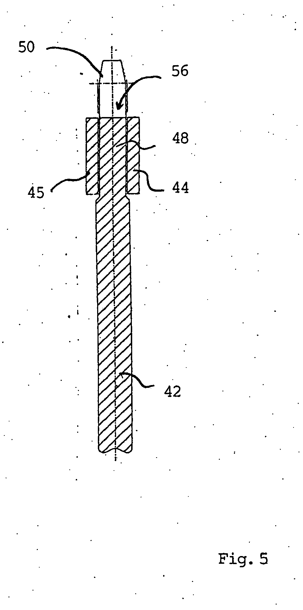

Diese Lösung ist auch aus Fig. 5 ersichtlich. Die Überleitkurven 44 und 45 erstrecken sich knapp benachbart dem Ketten-Umlenkrad 42 im Bereich seiner Verjüngung 48. Sie enden im Grunde auf der gleichen Höhe wie der Zahngrund 56 zwischen Zähnen, von denen der Zahn 50 aus Fig. 3 ersichtlich ist. Diese Lösung erlaubt eine sichere Abstützung und Umlenkung zur Einleitung der Bewegung in die halbkreisförmige Bewegung um das Ketten-Umlenkrad 42. Hierdurch lässt sich der Polygoneffekt belastungsunabhängig ausschalten oder zumindest drastisch reduzieren.

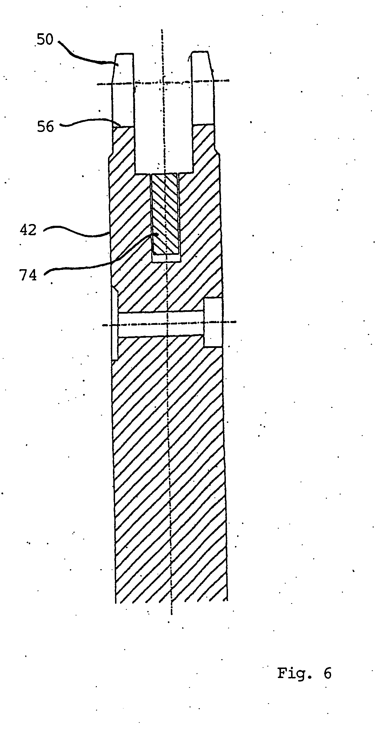

Fig. 6 zeigt die Variante, in der die Überleitkurve 74 im Ketten-Umlenkrad läuft.

## Patentansprüche

1. Fahrtreppe oder Fahrsteig, mit zwei Antriebsketten beidseitig eines mit Laufrollen auf Laufschienen geführten Stufenoder Palettenbandes, welche Antriebsketten über Kettenhülsen auf Lagerzapfen der Stufen oder Paletten drehbeweglich sind, **dadurch gekennzeichnet, dass** die Kettenhülse (30) Kettenschonrollen (38, 40, 41) trägt und dass eine Überleitkurve (44) sich seitlich eines Ketten-Umlenkrades (42) erstreckt, auf dem die Antriebsketten (24) über Kettenschonrollen (38, 40, 41) laufen.

2. Fahrtreppe oder Fahrsteig nach Anspruch 1, **dadurch gekennzeichnet, dass** sich zwei Überleitkurven (44, 45) beidseitig des Ketten-Umlenkrads (42) erstrecken.

3. Fahrtreppe oder Fahrsteig nach Anspruch 1, **dadurch gekennzeichnet, dass** sich eine Überleitkurve (94) innerhalb des Ketten-Umlenkrads (42) erstreckt.

4. Fahrtreppe nach einem der vorhergehenden Ansprüche, **dadurch gekennzeichnet, dass** das Ketten-Umlenkrad (42) im radial äußeren Bereich (48), an welchem die Überleitkurve (44) sich entlang erstreckt, eine reduzierte Stärke aufweist.

5. Fahrtreppe oder Fahrsteig nach einem der vorhergehenden Ansprüche, **dadurch gekennzeichnet, dass** die Kettenschonrollen (38, 40, 41) in axialer Richtung des Lagerzapfens (18) betrachtet mindestens zweiteilig ausgebildet sind und ein Teil (40, 41) für die Auflage an der Überleitkurve (44) und ein anderer Teil (38) für die Auflage an dem Ketten-Umlenkrad (42) bestimmt ist.

6. Fahrtreppe oder Fahrsteig nach einem der vorhergehenden Ansprüche, **dadurch gekennzeichnet, dass** die Kettenschonrollen (38, 40, 41) dreigeteilt sind und die äußeren Teile der Kettenschonrollen (40, 41) auf der Überleitkurve (44, 45) laufen.

7. Fahrtreppe oder Fahrsteig nach einem der vorhergehenden Ansprüche, **dadurch gekennzeichnet, dass** die Kettenschonrollen (38, 40, 41) dreigeteilt sind und der mittige Teil der Kettenschonrollen (38) auf der Überleitkurve (74) läuft.

8. Fahrtreppe oder Fahrsteig nach Anspruch 6 und 7, **dadurch gekennzeichnet, dass** die Teile der Kettenschonrollen (38, 40, 41) relativ zueinander drehbeweglich sind.

9. Fahrtreppe oder Fahrsteig nach einem der vorhergehenden Ansprüche, **dadurch gekennzeichnet, dass** die Kettenschonrollen (38, 40, 41) sich axial über die gesamte Länge der Kettenhülse (30) zwischen den inneren Kettengliedern (26) erstrecken.
